# EUROPÄISCHE PATENTSCHRIFT

(11) **EP 2 620 692 B1**
(45) Veröffentlichungstag und Bekanntmachung des Hinweises auf die Patenterteilung: **16.09.2020**
(21) Anmeldenummer: 12199426.3
(22) Anmeldetag: 27.12.2012
(51) Int. Cl.: B60Q 1/00, B60Q 1/28, B60Q 1/38, B29D 11/00, B60K 11/04, F21S 41/275

(54) **Fahrzeugscheinwerfer zur Erzeugung einer Hauptlichtverteilung und einer Zusatzlichtverteilung**
Vehicle headlamp for generating a main light distribution and an additional light distribution
Phare de véhicule pour la génération d'une répartition de lumière principale et une répartition de lumière supplémentaire

(30) Priorität: 24.01.2012 AT 500102012
(43) Veröffentlichungstag der Anmeldung: 31.07.2013
(73) Patentinhaber: ZKW Group GmbH, 3250 Wieselburg (AT)
(72) Erfinder: Luger, Andreas, 3233 Kilb (AT); Danner, Markus, 2252 Ollersdorf (AT)
(74) Vertreter: Patentanwaltskanzlei Matschnig & Forsthuber OG

(56) Entgegenhaltungen:
- EP-A1- 1 903 274
- EP-A1- 2 119 956
- DE-A1- 19 627 936
- DE-A1-102006 027 970
- DE-A1-102009 017 424
- JP-A- 2010 212 109
- US-A- 5 894 366

## Beschreibung

Die Erfindung betrifft einen Fahrzeugscheinwerfer gemäß Anspruch 1.

Solche kombinierten Fahrzeugscheinwerfer sind hinlänglich bekannt, beispielsweise aus der EP 2119 956 A1. Bei diesen Scheinwerfern sind in dem Scheinwerfergehäuse (unter anderem) beispielsweise eine Hauptlicht-Lichteinheit, etwa in Form einer Abblendlichteinheit und eine Zusatz-Lichteinheit, z.B. in Form einer Tagfahrlichteinheit angeordnet. Bei dem lichtemittierenden Bereich der Tagfahrlichteinheit handelt es sich beispielsweise um Leuchtringe, Lichtstäbe, etc., die häufig auf spezielle Weise geformt sind und so ein Markenzeichen für die jeweilige Fahrzeugmarke darstellen.

Diese lichtemittierenden Bereiche des Tagfahrlichtes sind bei Tag entsprechend gut zu sehen. Bei Dunkelheit, wenn die Hauptlicht-Lichteinheit, also in der Regel das Abblendlicht eingeschaltet ist, wird allerdings der lichtemittierende Bereich der Zusatzlicht-Lichteinheit von dem Hauptlicht überstrahlt und ist nicht mehr zu erkennen. Gesetzliche Regelungen erlauben nämlich den Betrieb des Zusatzlichtes (Tagfahrlichtes) zusätzlich zum Hauptlicht nur als Positionslicht mit einer Helligkeit von maximal ca. 5 -10% des Zusatzlichtes (Tagfahrlichtes). Durch die hohen Streulichtwerte des Hauptlichts (Abblendlichtes) wird dann die Form der lichtemittierenden Bereiche der Zusatzlicht-Lichteinheit nur mehr schwach oder gar nicht wahrgenommen.

Es ist eine Aufgabe der Erfindung, einen Fahrzeugscheinwerfer zu schaffen, bei welchem es auch im Betrieb des Hauptlichtes möglich ist, die Form des lichtemittierenden Bereiches der Zusatzlicht-Lichteinheit gut zu erkennen.

Diese Aufgabe wird mit einem eingangs erwähnten Fahrzeugscheinwerfer mit den Merkmalen des Kennzeichens des Anspruchs 1 gelöst.

Der bei einem herkömmlichen Scheinwerfer auftretende Effekt, dass im Betrieb des Hauptlichtes das Zusatzlicht nicht mehr sichtbar ist, ergibt sich dadurch, dass an bzw. in der Linse der Hauptlicht-Lichteinheit Streulicht-Reflexionen auftreten, sodass die Linse beleuchtet erscheint und dadurch die Zusatzlicht-Lichteinheit (d.h. der oder die lichtemittierenden Bereiche dieser Einheit) insbesondere dann, wenn sie wie gesetzlich vorgeschrieben nur stark gedimmt betrieben ist, nicht mehr oder nur noch kaum sichtbar ist, sodass das Markenzeichen des jeweiligen Fahrzeugherstellers nicht mehr erkennbar ist.

Dieser Effekt tritt dann auf, wenn die leuchtenden bzw. Licht emittierenden Bereiche der Zusatz-Lichteinheit optisch nahe zu der zumindest einen Linse der Hauptlicht-Lichteinheit angeordnet sind.

"Optisch nahe" bedeutet, dass dieser Bereich sich im optischen Einflussbereich der Linse befindet, wenn sich diese Bereiche also im Streulichtbereich der Hauptlichtfunktion befinden und von dieser im Betrieb der Hauptlichtfunktion überstrahlt werden. Je heller oder lichtstärker die Hauptlichtfunktion dabei ist, umso mehr wirken sich die Streulichtreflexionen auf der Linse auf die Sichtbarkeit der Zusatzlichtfunktion aus, und diese kann auch trotz größerer Entfernung noch "optisch nahe" sein. Grundsätzlich lässt sich feststellen, dass es oftmals schon ausreicht, wenn beide Lichteinheiten gemeinsam in dem Gehäuse des Scheinwerfers untergebracht sind, dass die Bedingung "optisch nahe" erfüllt ist.

Nochmals zusammengefasst bedeutet "optisch nahe", dass sich die angesprochenen Bereiche der Zusatzlicht-Lichteinheit in einer Entfernung zu der Linse der Hauptlicht-Lichteinheit befinden, dass sie im Betrieb der Hauptlicht-Lichteinheit von der (nicht behandelten) Linse überstrahlt werden.

Mit der Erfindung wird dieses Problem nun dadurch behoben, dass die Linse mit einer Antireflexionsschicht (AR-Coating) beschichtet wird. Dadurch können die an oder in der Linse auftretenden Reflexionen zumindest verringert werden, sodass die Linse keine oder wesentlich weniger Streustrahlung als im unbeschichteten Zustand erzeugt. Eine solche Linse wirkt bzw ist selbst bei eingeschalteter Hauptlicht-Lichteinheit dunkel und überstrahlt damit das eingeschaltete Zusatzlicht nicht mehr, dieses wird somit erkennbar.

Die JP 2010 212109 A beschreibt die Verwendung einer Antireflexionsbeschichtung für Linsen von Kraftfahrzeugscheinwerfern zur Steigerung der Effizienz des Kraftfahrzeugscheinwerfers.

Auch über der Hell-Dunkel-Grenze einer Abblendlichtverteilung sind gewisse, geringe Lichtstärken im Lichtbild gesetzlich vorgesehen ("Signlichtwerte"), die entsprechenden Minimal- und Maximalwerte etc. sind in entsprechenden gestzlichen Regelungen, wie ECE, SAE, CCC, ... beschrieben; beispielsweise können damit Überkopfwegweiser oder Verkehrszeichen im allgemeinen beleuchtet werden.

Unter Umständen können durch das verringerte Streulicht der Linse diese in der Hauptlichtverteilung geforderten "Signlichtwerte" nicht mehr erreicht werden; diese können aber durch das eingeschaltetet Zusatzlicht erreicht werden, das zu diesem Zweck auch mit höherer Lichtstärke als bisher erlaubt betrieben werden kann.

Unter der "Lichteintrittsfläche" ist jener Bereich der Linse zu verstehen, über welche Licht in die Linse eintritt; dies ist in der Regel die Fläche, welche der Lichtquelle der Hauptlicht-Lichteinheit zugewandt ist; über die Lichtaustrittsfläche tritt Licht aus der Linse aus und wird auf die Fahrbahn bzw in den Bereich vor dem Fahrzeug abgestrahlt. Erfindungsgemäß kann es nun ausreichend sein, wenn lediglich nur eine der beiden Fläche mit dem AR-Coating versehen ist. Es kann auch ausreichend sein, wenn eine oder beide Flächen nur bereichsweise und nicht vollständig mit dem AR-Coating versehen ist/sind.

Ebenso ist es von Vorteil, wenn die Lichteintrittsfläche und die Lichtaustrittsfläche vollständig mit einer Antireflexionsbeschichtung beschichtet sind, wobei es insbesondere von Vorteil ist, wenn beide Flächen vollständig beschichtet sind. Auch herstellungstechnisch ist dies von Vorteil.

Damit das Zusatzlicht im Hauptlichtbetrieb erkennbar ist, und um weiters die geforderten Signlichtwerte in der Hauptlichtverteilung zu erreichen, ist vorgesehen, dass die Zusatz-Lichteinheit im Hauptlichtbetrieb eingeschaltet und vorzugsweise gedimmt betrieben ist.

Wie oben schon erwähnt, werden durch die beschichtete Linse die gesetzlich vorgeschriebenen Streulichtwerte in der Regel soweit reduziert, dass die gesetzlichen Bestimmungen nicht mehr erfüllt werden können. Dies wird bei der vorliegenden Erfindung durch den zusätzlichen, vorzugsweise gedimmten Betrieb der Zusatzlicht-Lichteinheit kompensiert.

Insbesondere kann dabei vorgesehen sein, dass die Zusatz-Lichteinheit im Hauptlichtbetrieb mit einer geringeren Lichtstärke als die Hauptlicht-Lichteinheit betrieben ist, und die Zusatzlicht-Lichteinheit beispielsweise auf ca. 40 % der Lichtstärke der Hauptlichteinheit gedimmt ist.

Es kann vorkommen, dass die Zusatzlichtfunktion, beispielsweise ein Tagfahrlicht, wenn sie gleichzeitig mit der Hauptlichtfunktion, etwa einem Abblendlicht betrieben würde, in Bereiche des Abblendlichtes leuchtet, sodass dort die vorgesehenen Lichtwerte überschritten würden. Entsprechend darf ein Tagfahrlicht (im Vollbetrieb) nicht gemeinsam mit einem Abblendlicht betrieben werden. Häufig wird daher das Tagfahrlicht ausgeschaltet oder soweit gedimmt, dass es die Funktion eines Positionslichtes realisiert, was gesetzlich zulässig ist.

Damit bei der vorliegenden Erfindung das Branding, also die leuchtenden Bereiche des Zusatzlichtes auch im Betrieb des Hauptlichtes sichtbar sind, wird dieses derart gedimmt betrieben, dass es einerseits gut sichtbar ist, andererseits die Streulichtwerte für das Hauptlicht erzeugt, ohne dabei die Lichtwerte im Hauptlicht derart zu erhöhen, dass die gesetzlichen Anforderungen nicht mehr erfüllt wären.

Dabei haben sich bei einer Variante die oben beschriebenen Zahlenwerte als günstig erwiesen, wobei in der Regel dies aber eine für jeden Scheinwerfer vorzunehmende Abstimmung ist; generell gilt, dass das Zusatzlicht derart gedimmt werden sollte, dass die Streulichtwerte im Hauptlicht, also z.B. Über der HD-Linie bei einem Abblendlicht erfüllt (also weder überschritten noch unterschritten) werden.

Konkret kann vorgesehen sein, dass die Hauptlichtverteilung eine Abblendlichtverteilung oder eine Fernlichtverteilung ist, wobei die oben beschriebenen Thematiken insbesondere bei Abblendlicht von Bedeutung sind.

Außerdem kann vorgesehen sein, dass das Zusatzlicht ein Tagfahrlicht ist und die Zusatzlichtverteilung eine Tagfahrlichtverteilung bildet, oder dass das Zusatzlicht ein Positionslicht oder ein Fahrtrichtungsanzeiger ist.

Bei konkreten Ausführungsformen der Erfindung kann weiters vorgesehen sein, dass die Zusatz-Lichteinheit als im Betrieb leuchtenden bzw. Licht emittierenden Bereich zumindest einen Leuchtring, Lichtstab, etc. aufweist, welcher optisch nahe zu der zumindest einen Linse der Haupt-Lichteinheit, vorzugsweise um die Linse herum angeordnet ist.

Grundsätzlich ist es für die Erfindung unerheblich, aus welchen Bestandteilen die Licht emittierenden Bereiche des Zusatzlichtes ausgebildet sind. Lichtringe, Leuchtstäbe etc. kommen häufig zum Einsatz, da sie in relativ beliebige Formen formbar sind und so das vom jeweiligen Hersteller gewünscht Aussehen annehmen können. Oftmals sind diese Licht emittierenden Bereiche dann als Vollring oder einer oder mehrerer Teilringe um die Linse des Hauptlichtes herum angeordnet, sodass sie sehr nahe an der Linse liegen und leicht überstrahlt werden, wenn keine Maßnahmen entsprechend der vorliegenden Erfindung getroffen werden.

Wie oben schon erwähnt, kann vorgesehen sein, dass der Leuchtring, Lichtstab, etc in Form eines Kreises, eines oder mehrerer Halbkreise, oder in Form von einer oder mehreren gekrümmten Formen um die zumindest eine Linse herum angeordnet ist.

Besonders gut kann die Abstimmung der Beschichtung der Linse erfolgen, wenn eine Antireflexionsbeschichtung aus zwei oder mehr Schichten besteht.

Dabei ist vorteilhafterweise vorgesehen, dass benachbarte Schichten der Antireflexionsbeschichtung unterschiedliche Brechungsindizes aufweisen.

Die Dicke der Schichten liegt dabei typischerweise im Mikrometer-Bereich.

Im Folgenden ist die Erfindung an Hand der Zeichnung näher erläutert. In dieser zeigt
Fig. 1 zeigt eine herkömmliche Linse für eine Hauptlicht-Lichteinheit,
Fig. 2 einen Fahrzeugscheinwerfer mit zwei Lichtmodulen, wobei jedes Lichtmodul eine Hauptlicht-Lichteinheit und eine Zusatzlicht-Lichteinheit aufweist,
Fig. 3 eine beschichtete Linse, und
Fig. 4 einen Fahrzeugscheinwerfer aus Figur 2 mit beschichteten Linsen.

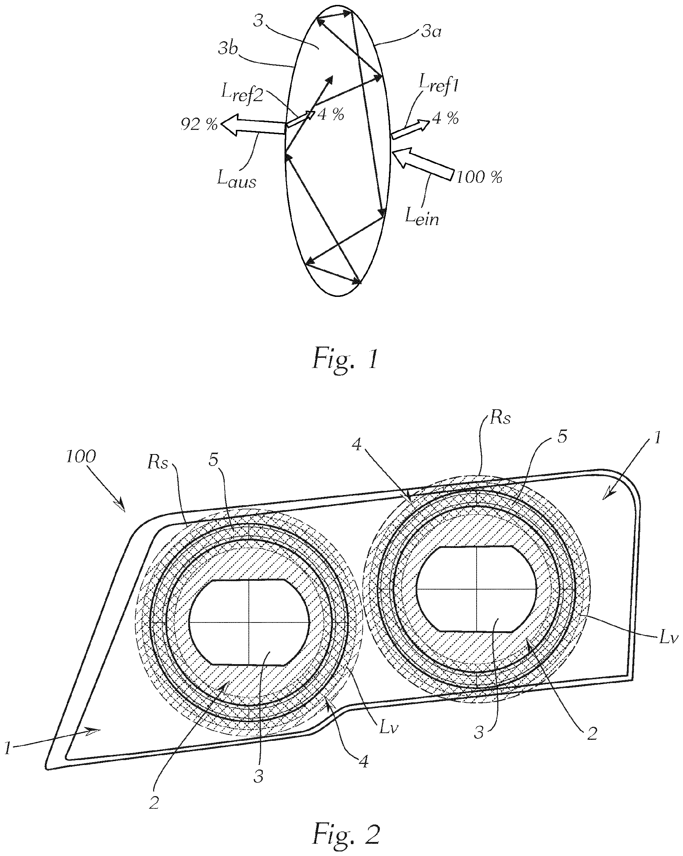

Figur 1 zeigt eine Linse 3 für eine Hauptlicht-Lichteinheit, z.B. für eine Abblendlicht-Lichteinheit, welche in Form eines Projektionsmoduls ausgeführt ist und z.B. eine Lichtquelle, einen Reflektor und die Projektionslinse 3 aufweist.

Licht Lein, welches von der nicht dargestellten Lichtquelle, gegebenenfalls über den ebenfalls nicht dargestellten Reflektor auf die Lichteintrittsfläche 3a der Linse trifft, wird zu einem Teil reflektiert (L_{ref1}), beispielsweise werden ca. 4% des einfallenden Lichtstroms refektiert. Weiters wird Licht beim Austritt aus der Linse 3 über die Lichtaustrittsfläche 3b an dieser Fläche 3b reflektiert (L_{ref2}), und es kommt interne zu weiteren Reflexionen. Diese Reflexionen belaufen sich ebenfalls auf ca. 4%, sodass ca. 92% des einfallenden Lichtstroms aus der Linse austreten (Lₐᵤₛ) und zur Erzeugung einer Hauptlichtverteilung verwendet werden können.

Durch diese Reflexionen geht einerseits Licht verloren, andererseits wirkt die Linse hell (beleuchtet).

Figur 2 zeigt einen Fahrzeugscheinwerfer 100 mit zwei Lichtmodulen 1, wobei jedes Lichtmodul eine Lichteinheit 2 zur Erzeugung einer Hauptlichtfunktion und eine Zusatz-Lichteinheit 4 umfasst. Die Hauptlicht-Lichteinheit 2 umfasst zumindest eine (nicht dargestellte) Lichtquelle, eventuell einen (nicht dargestellten) Reflektor (und/oder eine Primäroptik) und eine Linse 3, welche das von der Lichtquelle emittierte Licht als Hauptlicht-Lichtverteilung - in einem eingebauten Zustand der Lichteinheit in ein Fahrzeug - in einem Bereich vor dem Fahrzeug als Hauptlicht-Lichtverteilung abbildet.

Die Zusatz-Lichteinheit 4, mit welcher eine Zusatzlichtverteilung erzeugt wird, ist dabei derart angeordnet, dass im Betrieb der Zusatz-Lichteinheit 4 leuchtende bzw. Licht emittierende Bereiche 5, die hier beispielhaft als geschlossener Leuchtring 5 ausgebildet sind, optisch nahe zu der Linse 3 der Hauptlicht-Lichteinheit 2 angeordnet sind.

Beispielsweise erzeugt in dem gezeigten, nicht einschränkenden Beispiel eine Hauptlicht-Lichteinheit ein Abblendlicht und die andere ein Fernlicht, während die beiden Zusatzlicht-Lichteinheiten 4 bzw. deren lichtemittierende Bereiche 5 (Leuchtringe) gemeinsam ein Tagfahrlicht erzeugen. In diesem gezeigten Fall ist es entsprechend zweckmäßig, wenn beide Linsen erfindungsgemäß beschichtet sind.

Wäre beispielsweise nur eine der Linsen von einem Bereich 5, wie einem Leuchtring umgeben, so ist es in der Regel nur notwendig, wenn diese Linse beschichtet ist; normalerweise ist der Bereich 5 zu der anderen Linse, die er nicht umgibt, nicht mehr "optisch nahe". Dies bringt eine Kostenreduktion.

Es kann aber aber auch vorgesehen sein, wenn beide Linsen optisch bzw. geometrisch ident sind, dass beide Linsen beschichtet werden, auch wenn dies für eine der Linsen nicht notwendig wäre. Damit kann die Bauteilvielfalt reduziert werden.

Im Hauptlichtbetrieb leuchtet nun bei Verwendung einer Linse wie in Figur 1 dargestellt die Linse 3 so stark bzw. erzeugt so starke Reflexionsstreuungen, dass - wie in Figur 2 angedeutet - diese Reflexionsstreung Rs den leuchtenden Bereich 5 und den davon gebildeten Lichtring Lv überstrahlt.

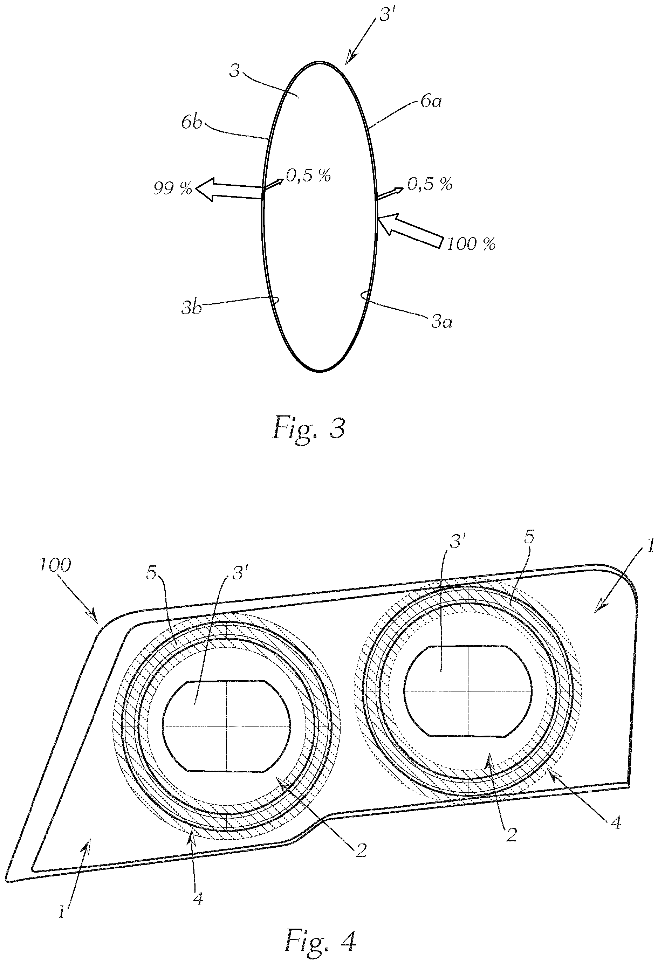

Figur 3 zeigt nun eine Linse 3' entsprechend der Erfindung. Dabei handelt es sich um eine Linse 3 wie in Figur 1 dargestellt, die an ihrer Lichteintrittsfläche 3a und an ihrer Lichtaustrittsfläche 3b jeweils mit einer Antireflexionsbeschichtung 6a, 6b versehen ist.

Wie in Figur 3 dargestellt wird durch eine solche Beschichtung 6a, 6b der Lichtverlust an jeder Fläche 3a, 3b auf ca. 0,5% (berechnet vom Gesamtlichtstrom) verringert, sodass die Linse 3' selbst bei aktiviertem Hauptlicht dunkel erscheint.

Figur 4 zeigt noch einmal den Scheinwerfer 100 aus Figur 2, jetzt mit beschichteten Linsen 3'. Wie schematisch zu erkennen ist, erzeugt die Hauptlicht-Lichteinheit 2 kaum mehr Streulicht, sodass die leuchtenden Bereiche 5 der Zusatz-Lichteinheiten 4 sichtbar werden, wenn diese im Hauptlichtbetrieb eingeschaltet (vorzugsweise gedimmt) sind.

Nochmals auf Figur 1 und insbesondere auf Figur 3 zurückkommend wird noch auf folgendes hingewiesen: Beim Lichteintritt in die Linse 3' gibt es 2 Reflexionen:
1) Luft - AR-Schicht 6a
2) AR Schicht 6a - Linsenmaterial 3

Diese beiden Reflexionen müssen destruktiv interferieren, damit sie sich auslöschen und es keine oder nur eine geringe Gesamtreflexion gibt.

Beim Lichtaustritt aus der Linse 3' gibt es 2 Reflexionen:
1) Linsenmaterial 3 - AR-Schicht 6b
2) AR-Schicht 6b - Luft

Diese beiden Reflexionen müssen ebenfalls destruktiv interferieren, damit sie sich auslöschen und es keine oder nur eine geringe Gesamtreflexion in den Linsenkörper 3 hinein gibt.

Das AR-Coating, also die AR-Schichten 6a, 6b werden dementsprechend optimiert.

Für einfachstes AR-Coating reicht theoretisch eine Schicht mit Wellenlänge/4 ("quarter wave plate") aus. In diesem Fall gilt n1 = √(n0 ns), mit
n₁= Brechungsindex AR-Coating
n₀= Brechungsindex Luft
n_{S}= Brechungsindex Linsenmaterial
Bei dem Material der Linse handelt es sich beispielsweise um Glas, Kunststoff (wie z.B. PC ("Polycarbonat") oder PMMA ("Polymethylmethacrylat", Plexiglas)) oder Silikon.

Die Linse kann auch aus zwei oder mehreren unterschiedlichen Materialien, die beispielsweise zusammengeklebt sind, gebildet sein (z.B. Achromat).

Besonders gut kann die Abstimmung der Beschichtung der Linse erfolgen, wenn die Antireflexionsbeschichtung 6a, 6b aus zwei oder mehr Schichten besteht, wobei vorteilhafterweise vorgesehen ist, dass benachbarte Schichten der Antireflexionsbeschichtung 6a, 6b unterschiedliche Brechungsindizes aufweisen.

Ein Scheinwerfer entsprechend der vorliegenden Erfindung ist in der Lage, die gesetzlichen Bestimmungen, wie beispielsweise ECE, SAE, CCC, ... zu erfüllen.

## Patentansprüche

1. Fahrzeugscheinwerfer (100), umfassend
zumindest eine Lichteinheit (2) zur Erzeugung einer Hauptlichtfunktion, wobei die Lichteinheit (2) aus zumindest einer Lichtquelle und zumindest einer Linse (3') besteht, welche zumindest eine Linse (3') das von der zumindest einen Lichtquelle emittierte Licht als Hauptlicht-Lichtverteilung - in einem eingebauten Zustand der Lichteinheit in ein Fahrzeug - in einem Bereich vor dem Fahrzeug als Hauptlicht-Lichtverteilung abbildet;
zumindest eine Zusatz-Lichteinheit (4), welche zur Erzeugung einer Zusatzlicht-Lichtverteilung ausgebildet ist, wobei die zumindest eine Zusatz-Lichteinheit (4) derart angeordnet ist, dass im Betrieb der Zusatz-Lichteinheit (4) leuchtende bzw. Licht emittierende Bereiche (5) der Zusatz-Lichteinheit (4) optisch nahe zu der zumindest einen Linse (3') der Hauptlicht-Lichteinheit (2) angeordnet sind, indem die zumindest eine Lichteinheit (2) und die zumindest eine Zusatz-Lichteinheit (4) gemeinsam in einem Gehäuse des Fahrzeugscheinwerfers angeordnet sind,
wobei die Hauptlichtverteilung eine Abblendlichtverteilung oder eine Fernlichtverteilung ist,
und wobei im Hauptlichtbetrieb die zumindest eine Zusatz-Lichteinheit (4) eingeschaltet ist, und wobei das Zusatzlicht ein Tagfahrlicht ist und die Zusatzlichtverteilung eine Tagfahrlichtverteilung bildet, wobei die Zusatz-Lichteinheit (4) im Hauptlichtbetrieb gedimmt betrieben ist, z.B. auf maximal 5-10% des Tagfahrlichtes, oder
das Zusatzlicht ein Positionslicht ist,
**dadurch gekennzeichnet, dass**
die zumindest eine Linse (3') der zumindest einen Hauptlicht-Lichteinheit (2) an ihrer Lichteintrittsfläche (3a) mit einer Antireflexionsbeschichtung (6a) versehen ist, und
die zumindest eine Linse (3') der zumindest einen Hauptlicht-Lichteinheit (2) an ihrer Lichtaustrittsfläche (3b) mit einer Antireflexionsbeschichtung (6b) versehen ist,
wobei durch die Antireflexionsbeschichtungen (6a, 6b) der Lichtverlust an jeder Fläche (3a, 3b) auf ca. 0,5% berechnet vom Gesamtlichtstrom verringert wird,
sodass die Linse (3') bei eingeschalteter Hauptlicht-Lichteinheit (2) dunkel erscheint und das eingeschaltete Zusatzlicht nicht überstrahlt.

2. Fahrzeugscheinwerfer nach Anspruch 1, **dadurch gekennzeichnet, dass** die Lichteintrittsfläche (3a) und die Lichtaustrittsfläche (3b) vollständig mit einer Antireflexionsbeschichtung (6, 6b) beschichtet sind.

3. Fahrzeugscheinwerfer nach Anspruch 1 oder 2, **dadurch gekennzeichnet, dass** die Zusatz-Lichteinheit (4) im Hauptlichtbetrieb mit einer geringeren Lichtstärke als die Hauptlicht-Lichteinheit betrieben ist, und die Zusatzlicht-Lichteinheit (4) beispielsweise auf ca. 40 % der Lichtstärke der Hauptlichteinheit gedimmt ist.

4. Fahrzeugscheinwerfer nach einem der Ansprüche 1 bis 3, **dadurch gekennzeichnet, dass** die Zusatz-Lichteinheit als im Betrieb leuchtenden bzw. Licht emittierenden Bereich zumindest einen Leuchtring, Lichtstab, etc. aufweist, welcher optisch nahe zu der zumindest einen Linse der Haupt-Lichteinheit (2), vorzugsweise um die Linse herum angeordnet ist.

5. Fahrzeugscheinwerfer nach Anspruch 4, **dadurch gekennzeichnet, dass** der Leuchtring, Lichtstab, etc in Form eines Kreises, eines oder mehrerer Halbkreise, oder in Form von einer oder mehreren gekrümmten Formen um die zumindest eine Linse (3') herum angeordnet ist.

6. Fahrzeugscheinwerfer nach einem der Ansprüche 1 bis 5, **dadurch gekennzeichnet, dass** eine Antireflexionsbeschichtung (6a, 6b) aus zwei oder mehr Schichten besteht.

7. Fahrzeugscheinwerfer nach Anspruch 6, **dadurch gekennzeichnet, dass** benachbarte Schichten der Antireflexionsbeschichtung (6a, 6b) unterschiedliche Brechungsindizes aufweisen.

## Claims

1. A vehicle headlamp (100) comprising
at least one light unit (2) configured to generate a primary lighting function, the light unit (2) consisting of at least one light source and at least one lens (3'), said at least one lens (3') imaging the light emitted by the at least one light source as a primary light distribution - in a mounted condition of the light unit in a vehicle - onto a region in front of the vehicle;
at least one auxiliary light unit (4) adapted to generate an auxiliary light distribution, said at least one auxiliary light unit (4) being arranged in such a way that, during operation of the auxiliary light unit (4), luminous or light-emitting regions (5) of the auxiliary light unit (4) are arranged optically close to the at least one lens (3') of the primary light unit (2), by positioning the at least one light unit (2) and the at least one auxiliary light unit (4) together in a housing of the vehicle headlamp,
where the primary light distribution is a dipped beam distribution or a main beam distribution, and wherein the at least one auxiliary light unit (4) is switched on during primary lighting operation, and wherein the auxiliary light is a daytime running light and the auxiliary light distribution forms a daytime running light distribution, wherein the auxiliary light unit (4) is operated dimmed in the primary light mode, e.g. to a maximum of 5 to 10% of the daytime running light,
or the auxiliary light is a position light,
**characterised in that**
the at least one lens (3') of the at least one primary light unit (2) is provided with an anti-reflection coating (6a) on its light-entry surface (3a), and
the at least one lens (3') of the at least one primary light unit (2) is provided with an anti-reflection coating (6b) on its light-exit surface (3b),
wherein the anti-reflection coatings (6a, 6b) reduce the loss of light at each surface (3a, 3b) to about 0.5% calculated from the total luminous flux,
so that the lens (3') appears dark when the primary light unit (2) is switched on and does not outshine the switched-on auxiliary light.

2. Vehicle headlamp according to claim 1, **characterised in that** the light-entry surface (3a) and the light-exit surface (3b) are completely coated with anti-reflection coatings (6a, 6b).

3. Vehicle headlamp according to claim 1 or 2, **characterised in that** during primary lighting operation, the auxiliary light unit (4) is operated with a lower luminous intensity than the primary light unit, and the auxiliary light unit (4) is dimmed to e.g. approximately 40% of the luminous intensity of the primary light unit.

4. Vehicle headlamp according to any one of claims 1 to 3, **characterised in that** the auxiliary light unit comprises, as the luminous or light-emitting region during operation, at least one lighting ring, lighting rod, etc., which is arranged optically close to the at least one lens of the primary light unit (2), preferably surrounding the lens.

5. Vehicle headlamp according to claim 4, **characterised in that** the lighting ring, lighting rod, etc. is arranged realizing a circle, one or more semicircles, or realizing one or more curved shapes around the at least one lens (3').

6. Vehicle headlamp according to any one of claims 1 to 5, **characterised in that** an anti-reflection coating (6a, 6b) consists of two or more layers.

7. Vehicle headlamp according to claim 6, **characterised in that** adjacent layers of the antireflection coating (6a, 6b) have different refractive indices.

## Revendications

1. Phare de véhicule (100), comprenant
au moins une unité d'éclairage (2) pour générer une fonction de lumière principale, l'unité d'éclairage (2) étant constituée d'au moins une source de lumière et d'au moins une lentille (3'), laquelle au moins une lentille (3') image la lumière émise par ladite au moins une source de lumière comme distribution de lumière principale - dans un état installé de l'unité d'éclairage dans un véhicule - dans une région devant le véhicule ;
au moins une unité d'éclairage supplémentaire (4) qui est conçue pour générer une distribution de lumière supplémentaire, ladite au moins une unité d'éclairage supplémentaire (4) étant disposée de telle sorte que, lors du fonctionnement de l'unité d'éclairage supplémentaire (4), des zones d'éclairage ou d'émission de lumière (5) de l'unité d'éclairage supplémentaire (4) sont disposées optiquement à proximité de ladite au moins une lentille (3') de l'unité d'éclairage principale (2) par le fait que ladite au moins une unité d'éclairage (2) et ladite au moins une unité d'éclairage supplémentaire (4) sont disposées ensemble dans un boîtier du phare du véhicule,
dans lequel la distribution de la lumière principale est une distribution en faisceau de croisement ou en faisceau de route,
et dans lequel ladite au moins une unité d'éclairage supplémentaire (4) est allumée en mode d'éclairage principal,
et dans lequel l'éclairage supplémentaire est un feu de circulation diurne et la répartition de l'éclairage supplémentaire forme une répartition de l'éclairage de circulation diurne, dans lequel l'unité d'éclairage supplémentaire (4) fonctionne de manière atténuée en mode d'éclairage principal, par exemple jusqu'à un maximum de 5-10% du feu de circulation diurne,
ou l'éclairage supplémentaire est un feu de position,
**caractérisé en ce que**
ladite au moins une lentille (3') de ladite au moins une lumière principale (2) est pourvue d'un revêtement anti-reflets (6a) sur leur surface d'entrée de la lumière (3a), et
ladite au moins une lentille (3') de ladite au moins une lumière principale (2) est pourvue d'un revêtement anti-reflets (6b) sur leur surface de sortie de la lumière (3b),
dans laquelle les revêtements antireflets (6a, 6b) réduisent la perte de lumière à chaque surface (3a, 3b) à environ 0,5 % calculée à partir du flux lumineux total,
de sorte que la lentille (3') apparaisse sombre lorsque l'unité d'éclairage principale (2) est allumée et n'éclipse pas la lumière auxiliaire allumée.

2. Projecteur de véhicule selon la revendication 1, **caractérisé en ce que** la surface d'entrée de la lumière (3a) et la surface de sortie de la lumière (3b) sont entièrement recouvertes d'un revêtement anti-reflets (6, 6b).

3. Projecteur de véhicule selon la revendication 1 ou 2, **caractérisé en ce que** l'unité d'éclairage auxiliaire (4) fonctionne en mode d'éclairage principal avec une intensité lumineuse inférieure à celle de l'unité d'éclairage principal, et l'unité d'éclairage auxiliaire (4) est atténuée, par exemple à environ 40 % de l'intensité lumineuse de l'unité d'éclairage principal.

4. Projecteur de véhicule selon l'une quelconque des revendications 1 à 3, **caractérisé en ce que** l'unité d'éclairage supplémentaire présente, comme zone qui éclaire ou émet de la lumière pendant le fonctionnement, au moins un anneau d'éclairage, une barre lumineuse, etc., qui est disposé optiquement à proximité de ladite au moins une lentille de l'unité d'éclairage principale (2), de préférence autour de la lentille.

5. Projecteur de véhicule selon la revendication 4, **caractérisé en ce que** l'anneau d'éclairage, la barre lumineuse, etc. est disposé sous la forme d'un cercle, d'un ou de plusieurs demi-cercles, ou sous la forme d'une ou de plusieurs formes courbes autour d'au moins une lentille (3').

6. Projecteur de véhicule selon l'une quelconque des revendications 1 à 5, **caractérisé en ce qu'**un revêtement antireflet (6a, 6b) est constitué de deux ou plusieurs couches.

7. Projecteur de véhicule selon la revendication 6, **caractérisé en ce que** les couches adjacentes du revêtement antireflet (6a, 6b) ont des indices de réfraction différents.
